# EUROPEAN PATENT SPECIFICATION

(11) **EP 0 525 099 B1**
(45) Date of publication and mention of the grant of the patent: **10.04.1996**
(21) Application number: 91908774.2
(22) Date of filing: 22.04.1991
(51) Int. Cl.: A01G 13/10

(54) **TREE SHELTERS**
BAUMSCHUTZ
ABRIS POUR ARBRES

(30) Priority: 27.04.1990 GB 9008866; 10.07.1990 GB 9015143
(43) Date of publication of application: 03.02.1993
(73) Proprietor: TUBEX LIMITED, Send Woking Surrey GU23 7HB (GB)
(72) Inventor: HURLSTONE, Graham, Frank, Surrey GU7 1EY (GB)
(74) Representative: Moore, Anthony John
(86) International application number: GB9100638
(87) International publication number: WO9115946

(56) References cited:
- WO-A-87/01904
- FR-A- 1 143 946
- FR-A- 2 484 773
- FR-A- 2 621 441

## Description

This invention relates to a shelter of the type described in the preamble portion of claim 1. Such a shelter is known for example from FR-A-1,143,946.

Tree shelters are now commonly employed to protect young trees from damage by, for example, wind or being eaten or trodden on by animals; and to provide a micro-climate which promotes tree growth.

It is an object of the invention to make a tree shelter which requires less time, and reduces the number of operations required, to produce a satisfactory combination of the young tree planted in the earth with the tree shelter around it, as compared with a conventional tree shelter, which requires a stake to be driven into the ground, the shelter to be positioned around the tree so that its end rests on the ground, and then the stake to be secured to the shelter with ties.

According to the invention, this is achieved by the shelter being embodied as indicated in the characterising portion of claim 1. With such a construction, an additional stake and ties will in nearly all cases be unnecessary.

Preferably, the end portion is formed with an end face lying in a plane which is skew to the axis of the tube, so as to provide both a blunt chisel point to the end of the tube and an open area defined by the end face which allows subsequent root development. The end face of the other end of the tube is simply normal to the tube axis.

Preferably again, the tube consists of an inner tubular wall and an outer tubular wall which is joined to the inner wall by webs which space the two walls apart. This enables the tube to be strong without having an excessive wall thickness; to be light in weight; and reduces the amount of material required.

For convenience of storage and transportation the shelters may be manufactured as nesting sets, four being the optimum number constituting a set to give a good packing ratio at the same time as an acceptably small range of tube diameters.

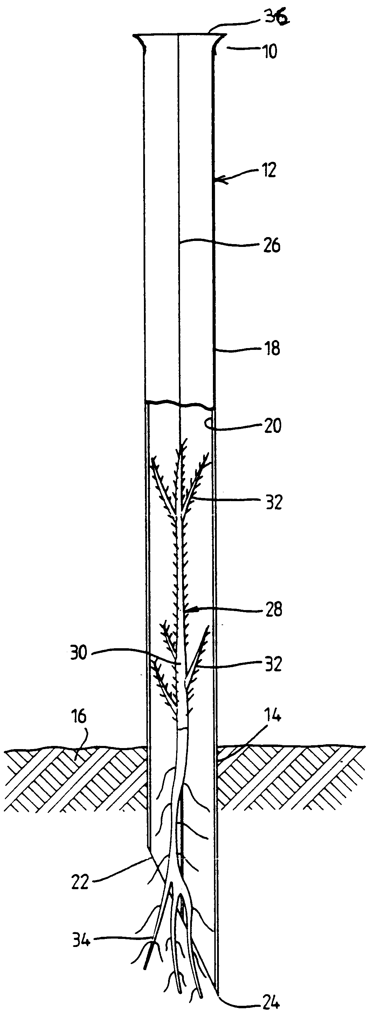

An example in accordance with the invention is described below with reference to the accompanying drawing, which shows an elevation of a young tree planted in earth with a tree shelter around it and extending into the earth.

The drawing shows a bare-rooted planting stock, namely a young Oregon pine tree 28 having a length within the range 6 to 18 cm, and a stem 30, branches 32 and roots 34, some of the roots lying within the lower end portion 14 of a tree shelter according to the embodiment which comprises an elongate tube 12 of circular or square cross-section.

It is possible to plant the young tree 28 in the earth 16 in the normal way, subsequently to pass the tube 12 over it, and then to push the portion 14 into the earth, firming the earth around the tube if necessary. Alternatively, it is possible firstly to place the young tree 28 in the tube 12 with the roots in the end portion 14; make a cylindrical hole in the earth 16 with a tool such as a dibber; withdraw the tool; and then to insert the young tree 24 and the end portion 14 of the tube into the hole, finally firming the earth around the portion 14.

In both cases the insertion of the end portion 14 of the tube into the earth is facilitated by the shaping of the end portion 14, which extends to a lower level on the right-hand side than on the left-hand side, so that the tube appears to have a somewhat pointed end 24, as viewed from one side, as the drawing shows. In the illustrated case the lower end face 22 of the tube lies in a plane which is oblique (not perpendicular as in the case of the conventional tree shelter) with respect to the axis of the tube. The lower part of the end portion 14 is consequently open on its left side and its lower side to allow development of the root of the tree.

The tube 12 is transparent or translucent and is made by extruding a plastics material, for example polyethylene, polypropylene or polycarbonate, and preferably a material which has been treated to render it degradable by ultra-violet radiation. The tube consists of an inner tubular wall 20 and an outer tubular wall 18 which is joined to the inner wall by webs (not shown), extending parallel to the axis of the tube, which space the two walls apart.

The tree grows within the tube 12 towards its upper end, where the end face 36 lies in a plane perpendicular to the axis of the tube which has a flared mouth 10 to prevent the rim from damaging the leaves and branches of the young tree as it grows through the mouth.

The tube 12 may be constructed to facilitate its being opened out or split apart by the growth of the tree. Thus there is a line of weakness 26 or two or more such lines, for example two opposite lines of weakness, extending along the tube 12. In the present case where the tube consists of two walls 18 and 20, one of them, preferably the wall 18, may have at least one slit extending through it over most or all of its length and between adjacent webs. In the case of a solid walled tube the line(s) of weakness may take the form of lines of reduced thickness; alternatively the wall of a single or double-walled tube may be provided with one or more cuts extending along part of the length of the tube.

In the protected environment of the tube 12, the tree 28 will grow more quickly than in the open, and when it outgrows the shelter 10 will force it apart along the lines of weakness 26 so that growth is not restricted. Eventually the shelter 10 will disintegrate through the action of ultra-violet light and will not therefore litter the countryside.

As the shelter 12 is thinner than conventional shelters, it is the better able to be self-supporting and allows the usual stake and tie arrangement to be dispensed with. Not only does the shelter of the present invention reduce the number of shelter components required to one but it also, by simplifying shelter installation and combining it with the planting step, greatly reduces the total labour required.

If the young tree is delivered to the site in a container of earth or compost instead of being bare-rooted, it may be inserted in the tube 12 such that the bottom of the container is level with, or projects a little beyond, the pointed end 24 and the top of the container is, in the completed assembly, at a level at or near that of the surrounding earth.

The tube 12 may have an internal width of 4.7 cm, and an external width of 5.0 cm. With such dimensions, the tube may be the innermost one of a plurality of tree shelters as shown in the drawing but of differing widths, for example four such tree shelters, in an assembly in which they are placed within one another, in order to save space during storage or transport. The outer tube may have an external width of 7.1 cm, for example, it being necessary to have only a very small clearance between members of the set.

A tree shelter as described above protects the tree from damage by wind, or by being trodden on or knocked down or eaten by animals, such as rodents and other small mammals.

A further advantage of the tree shelter according to the invention lies in the protection it affords to young trees against attack by Hylobius hylastes, which feeds on the shoots of young trees, especially on sites which have previously carried a crop of conifers. Known methods of protection include cotton mesh and "paper hats"; however the tree shelter according to the invention provides protection against H. hylastes besides affording the other advantages, including beneficial micro-climate, enumerated earlier.

A yet further advantage of the tree shelter according to the present invention is that it may be used as a packaging for the young tree when it is being transported, for example from the nursery to the planting site.

## Claims

1. A shelter comprising a hollow body (12) formed of transparent or translucent material and having one end pointed to facilitate its insertion into the earth and an opposite end portion (36), characterised in that the shelter (10) is an elongate tube (12) which acts to support a tree (28) as it grows towards said opposite end portion (36), in that the end face of said one end portion (14) lies in a plane which is oblique with respect to the longitudinal axis of the tube (12), and in that the tube (12) is constructed with at least one line of weakness (26) extending along the tube (12) and/or with at least one slit extending through the side of the tube (12) and at least part of the way along the tube (12).

2. A shelter according to claim 1, characterised in that the tube (12) consists of an inner tubular wall (20) and an outer tubular wall (18) which is joined to the inner wall by webs which space the two walls apart.

3. A shelter according to claim 1 or 2, characterised in that the mouth (10) of the opposite end (36) of the tube (12) is flared or out-turned.

4. A shelter according to claim 1, 2 or 3, characterised in that it is made of plastics material which has been treated to make it degradable by ultra-violet radiation.

5. A shelter according to any preceding claim and having a young tree received therein.

6. An assembly comprising a plurality of shelters, each according to any preceding claim and of differing widths such that they may be placed within one another.

## Patentansprüche

1. Schutzelement mit einem Hohlkörper (12) aus einem transparenten oder transluzenten Werkstoff mit einem angespitzten Ende, um das Eindringen in den Erdboden zu erleichtern, und mit einem entgegengesetzten Ende (36), **dadurch gekennzeichnet**, daß das Schutzelement aus einer langgestreckten Röhre (12) gebildet ist, die als Stütze für einen Baum (28) dient, während dieser dem entgegengesetzten Ende (36) entgegenwächst, daß die Endfläche des besagten Endbereichs (14) in einer Ebene liegt, die gegenüber der Längsachse der Röhre (12) geneigt ist, und daß die Röhre mindestens einen geschwächten, linienförmigen Bereich aufweist, der sich entlang der Röhre (12) erstreckt, und/oder sie weist mindestens einen Schlitz auf, der sich durch die Wand der Röhre (12) erstreckt sowie mindestens entlang eines Teils der Röhre (12).

2. Schutzelement nach Anspruch 1, dadurch gekennzeichnet, daß die Röhre (12) aus einer inneren, röhrenförmigen Wand (20) und aus einer äußeren, röhrenförmigen Wand (18) besteht, welche mit der inneren Wand über Rippen (webs) verbunden ist, welche die beiden Wände voneinander trennen.

3. Schutzelement nach Anspruch 1 oder 2, dadurch gekennzeichnet, daß die Mündung des entgegengesetzten Endes (36) der Röhre (12) überhängend ausgebildet oder nach auswärts gebogen ist.

4. Schutzelement nach Anspruch 1, 2 oder 3, dadurch gekennzeichnet, daß es aus einem Kunststoff hergestellt ist, welcher derart behandelt ist, daß er durch ultraviolette Strahlung abbaubar ist.

5. Schutzelement nach einem der vorhergehenden Ansprüche, dadurch gekennzeichnet, daß ein junger Baum darin aufgenommen ist.

6. Ensemble umfassend eine Mehrzahl von Schutzelementen, jedes nach einem der vorhergehenden Ansprüche und von unterschiedlicher Weite, so daß sie ineinander geschachtelt werden können.

## Revendications

1. Abri comprenant un corps creux (12) formé en un matériau transparent ou translucide et ayant une extrémité pointue pour faciliter son introduction dans la terre et une partie terminale opposée (36), caractérisé en ce que l'abri (10) est un tube allongé (12) qui sert à supporter un arbre (28) lorsqu'il croît en direction de ladite partie terminale opposée (36), en ce que la face terminale de ladite partie terminale (14) se trouve dans un plan qui est en oblique par rapport à l'axe longitudinal du tube (12) et en ce que le tube (12) est construit avec au moins une ligne de faiblesse (26) s'étendant le long du tube (12) et/ou avec au moins une fente s'étendant à travers le côté du tube (12) et au moins une partie de la longueur du tube (12).

2. Abri selon la revendication 1, caractérisé en ce que le tube (12) comprend une paroi tubulaire intérieure (20) et une paroi tubulaire extérieure (18), laquelle est jointe à la paroi intérieure par des nervures qui maintiennent espacées les deux parois.

3. Abri selon la revendication 1 ou la revendication 2, caractérisé en ce que l'embouchure (10) de l'extrémité opposée (36) du tube (12) est évasée ou retournée vers l'extérieur.

4. Abri selon l'une des revendications 1, 2 ou 3, caractérisé en ce qu'il est en une matière plastique qui a été traitée pour la rendre dégradable par les rayons ultraviolets.

5. Abri selon l'une quelconque des revendications précédentes, à l'intérieur duquel est logé un jeune arbre.

6. Ensemble comprenant une multiplicité d'abris, chacun selon l'une des revendications précédentes et de largeurs différentes de telle sorte qu'ils peuvent être placés les uns à l'intérieur des autres.
